# EUROPEAN PATENT APPLICATION

(11) **EP 4 235 568 A1**
(43) Date of publication of application: **30.08.2023**
(21) Application number: 23157709.9
(22) Date of filing: 21.02.2023
(51) Int. Cl.: G06T 7/00

(54) **ANALYSIS METHOD AND ANALYSIS APPARATUS**

(30) Priority: 28.02.2022 JP 2022029284
(71) Applicant: SCREEN Holdings Co., Ltd., Kyoto 602-8585 (JP)
(72) Inventor: TOKISUE, Shogo, Kyoto, 602-8585 (JP); HASEBE, Ryo, Kyoto, 602-8585 (JP); OGI, Hiroshi, Kyoto, 602-8585 (JP); OKAMOTO, Satoshi, Kyoto, 602-8585 (JP)
(74) Representative: Goddar, Heinz J.

(57) **Abstract**

An analysis apparatus includes a two-dimensional photographing unit 20, a three-dimensional photographing unit 30, and a computer 50 serving as an analysis unit. The two-dimensional photographing unit 20 two-dimensionally photographs a sample, to acquire a two-dimensional image D2. The three-dimensional photographing unit 30 three-dimensionally photographs the sample to acquire a three-dimensional image D3. The computer 50 analyzes the two-dimensional image D2 and outputs a two-dimensional analysis result R2, first. Subsequently, the computer 50 analyzes the three-dimensional image D3 and outputs a three-dimensional analysis result R3. At that time, the computer 50 analyzes the three-dimensional image D3 using an indicator included in the two-dimensional analysis result R2. This can improve the accuracy of the three-dimensional analysis result R3. Consequently, a more accurate analysis result of the sample can be acquired than that acquired in a case in which either two-dimensional photographing or three-dimensional photographing is performed solely.

## Description

### RELATED APPLICATIONS

This application claims the benefit of Japanese Application No. 2022-029284, filed on February 28, 2022, the disclosure of which is incorporated by reference herein.

### BACKGROUND OF THE INVENTION

### Field of the Invention

The present invention relates to an analysis method and an analysis apparatus for analyzing a sample in which a plurality of observed objects are three-dimensionally distributed.

### Description of the Background Art

Conventionally, in pathology and cell culture, a biological sample in which a plurality of cells are three-dimensionally distributed is photographed, and the biological sample is analyzed on the basis of an image acquired by the photographing. Known methods of photographing a biological sample includes a method of two-dimensionally photographing using an optical microscope, a method of three-dimensionally photographing using optical coherence tomography (OCT), and the like. For example, Japanese Patent Application Laid-Open No. 2019-133429 describes a technique of acquiring a three-dimensional image of an embryo using optical coherence tomography.

By two-dimensional photographing using an optical microscope, it is possible to acquire a higher-resolution image than that acquired by three-dimensional photographing. However, in the case of two-dimensional photographing, only with a single image, a stereoscopic structure of a biological sample cannot be grasped. For this reason, photographing is performed a plurality of times in the presence of changes of a focus position of the optical microscope, and a biological sample is analyzed on the basis of a plurality of two-dimensional images acquired by the photographing.

Meanwhile, three-dimensional photographing using optical coherence tomography or the like has an advantage of more easily grasping a stereoscopic structure of a biological sample than two-dimensional photographing. However, in the case of three-dimensional photographing, resolution of an image being acquired is likely to be reduced as compared to that in two-dimensional photographing, which causes a problem of difficulties in acquiring an accurate analysis result concerning details of a structure.

### SUMMARY OF THE INVENTION

The present invention has been made in view of the above-described situation, and its object is to provide an analysis method and analysis apparatus that can acquire an analysis result of a sample more accurately than those in a case in which either two-dimensional photographing or three-dimensional photographing is performed solely.

In order to overcome the above-described problem, the first invention of the present application is directed to an analysis method for analyzing a sample in which a plurality of observed objects are three-dimensionally distributed, the method including the steps of: a) two-dimensionally photographing the sample, to acquire a two-dimensional image; b) three-dimensionally photographing the sample, to acquire a three-dimensional image; c) analyzing the two-dimensional image, to output a two-dimensional analysis result; and d) analyzing the three-dimensional image, to output a three-dimensional analysis result, wherein the step d) includes analyzing the three-dimensional image using an indicator included in the two-dimensional analysis result.

The second invention of the present application is directed to the analysis method recited in the first invention, wherein the sample is an embryo, the observed objects are cells included in the embryo, and the two-dimensional analysis result is the number of the cells included in the embryo.

The third invention of the present application is directed to the analysis method of the second invention, wherein the three-dimensional analysis result is a result of identification of shapes of the cells included in the embryo, and the step d) includes determining the number of areas for which the result of identification of the shapes of the cells is calculated, on the basis of the number of cells acquired in the step c).

The fourth invention of the present application is directed to the analysis method of the second or third invention, the method further including the step of e) outputting a classification result according to Veeck's classification representing a state of the embryo on the basis of the three-dimensional analysis result, after the step d).

The fifth invention of the present application is directed to an analysis method for analyzing a sample in which a plurality of observed objects are three-dimensionally distributed, the method including the steps of: a) two-dimensionally photographing the sample, to acquire a two-dimensional image; b) three-dimensionally photographing the sample, to acquire a three-dimensional image; c) analyzing the two-dimensional image, to output a two-dimensional analysis result; d) analyzing the three-dimensional image, to output a three-dimensional analysis result; and e) outputting a comprehensive analysis result on the basis of the two-dimensional analysis result and the three-dimensional analysis result.

The sixth invention of the present application is directed to the analysis method of the fifth invention, wherein the sample is an embryo, and each of the two-dimensional analysis result, the three-dimensional analysis result, and the comprehensive analysis result is a classification result according to Veeck's classification representing a state of the embryo.

The seventh invention of the present application is directed to the analysis method of any of the first to sixth inventions, wherein the step a) includes photographing in a bright-field view while changing a focus position, to acquire a plurality of the two-dimensional images, and the step c) includes analyzing the plurality of two-dimensional images, to acquire the two-dimensional analysis result.

The eighth invention of the present application is directed to the analysis method of any of the first to seventh inventions, wherein, in the step b), the three-dimensional image is acquired using optical coherence tomography.

The ninth invention of the present application is directed to an analysis apparatus that analyzes a sample in which a plurality of observed objects are three-dimensionally distributed, the apparatus including: a two-dimensional photographing unit configured to two-dimensionally photograph the sample, to acquire a two-dimensional image; a three-dimensional photographing unit configured to three-dimensionally photograph the sample, to acquire a three-dimensional image; and an analysis unit configured to analyze the sample on the basis of the two-dimensional image and the three-dimensional image, wherein the analysis unit performs: a two-dimensional analyzing process of analyzing the two-dimensional image, to output a two-dimensional analysis result; and a three-dimensional analyzing process of analyzing the three-dimensional image, to output a three-dimensional analysis result, and in the three-dimensional analyzing process, the three-dimensional image is analyzed using an indicator included in the two-dimensional analysis result.

The tenth invention of the present application is directed to an analysis apparatus that analyzes a sample in which a plurality of observed objects are three-dimensionally distributed, the apparatus including: a two-dimensional photographing unit configured to two-dimensionally photograph the sample, to acquire a two-dimensional image; a three-dimensional photographing unit configured to three-dimensionally photograph the sample, to acquire a three-dimensional image; and an analysis unit configured to analyze the sample on the basis of the two-dimensional image and the three-dimensional image, wherein the analysis unit performs: a two-dimensional analyzing process of analyzing the two-dimensional image, to output a two-dimensional analysis result; a three-dimensional analyzing process of analyzing the three-dimensional image, to output a three-dimensional analysis result; and a comprehensive analyzing process of outputting a comprehensive analysis result on the basis of the two-dimensional analysis result and the three-dimensional analysis result.

According to the first to fourth inventions of the present application, a three-dimensional image can be analyzed using an indicator acquired accurately by two-dimensional analysis. Thus, an accurate three-dimensional analysis result can be acquired.

Especially, according to the second invention of the present application, information about the number of cells, that is more accurately acquired by two-dimensional analysis than that acquired by three-dimensional analysis, is used in three-dimensional analysis. Thus, an accurate three-dimensional analysis result can be acquired.

Especially, according to the third invention of the present application, a three-dimensional analysis result of cells can be accurately calculated on the basis of the number of the cells acquired by two-dimensional analysis.

Further, according to the fifth to eighth inventions of the present application, a comprehensive analysis result is output using two analysis results acquired in two different approaches of two-dimensional analysis and three-dimensional analysis. Thus, an accurate comprehensive analysis result can be acquired.

Especially, according to the sixth invention of the present application, two classification results according to Veeck's classification acquired in two-different approaches of two-dimensional analysis and three-dimensional analysis are integrated, and then a final classification result according to Veeck's classification is output. Thus, an accurate classification result according to the Veeck's classification can be acquired.

Especially, according to the seventh invention of the present application, a plurality of two-dimensional images are analyzed, and thus an accurate two-dimensional analysis result can be acquired.

Especially, according to the eighth invention of the present application, it is possible to accurately acquire a three-dimensional image by using optical coherence tomography.

Further, according to the ninth invention of the present application, a three-dimensional image can be analyzed using an indicator acquired accurately by two-dimensional analysis. Thus, an accurate three-dimensional analysis result can be acquired.

Further, according to the tenth invention of the present application, a comprehensive analysis result is output using two analysis results acquired in two different approaches of two-dimensional analysis and three-dimensional analysis. Thus, an accurate comprehensive analysis result can be acquired.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a view showing a configuration of an analysis apparatus;
FIG. 2 is a view showing an example of an embryo;
FIG. 3 is a control block diagram of the analysis apparatus;
FIG. 4 is a block diagram conceptually showing functions of a computer for performing photographing and analyzing processes according to a first preferred embodiment;
FIG. 5 is a flowchart showing a flow of the photographing and analyzing processes according to the first preferred embodiment;
FIG. 6 is a block diagram conceptually showing functions of a computer for performing photographing and analyzing processes according to a second preferred embodiment; and
FIG. 7 is a flowchart showing a flow of the photographing and analyzing processes according to the second preferred embodiment.

### DESCRIPTION OF THE PREFERRED EMBODIMENTS

Hereinafter, preferred embodiments of the present invention will be described with reference to the drawings.

### <1. Configuration of Analysis Apparatus>

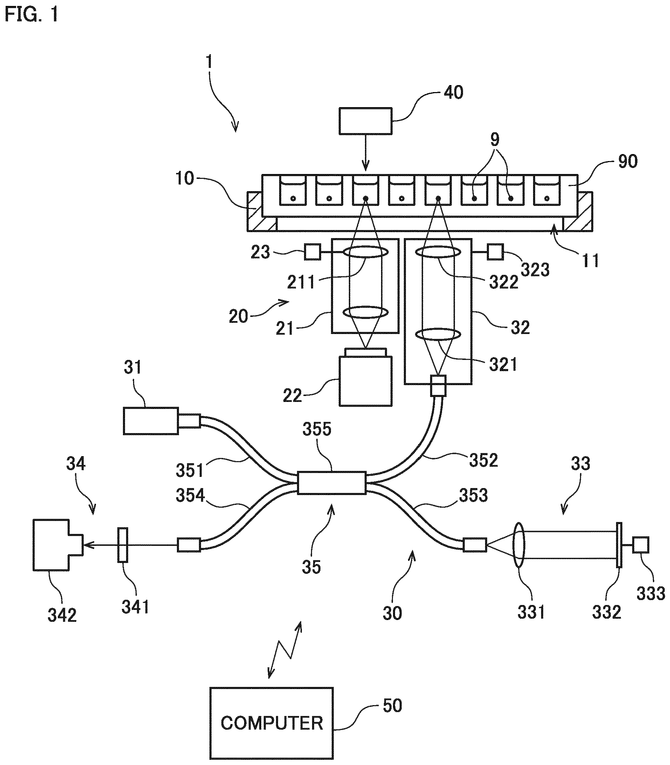

FIG. 1 is a view showing a configuration of an analysis apparatus 1 according to one preferred embodiment of the present invention. The analysis apparatus 1 is an apparatus that photographs a sample held in a sample holder 90 and analyzes a state of the sample on the basis of an acquired image.

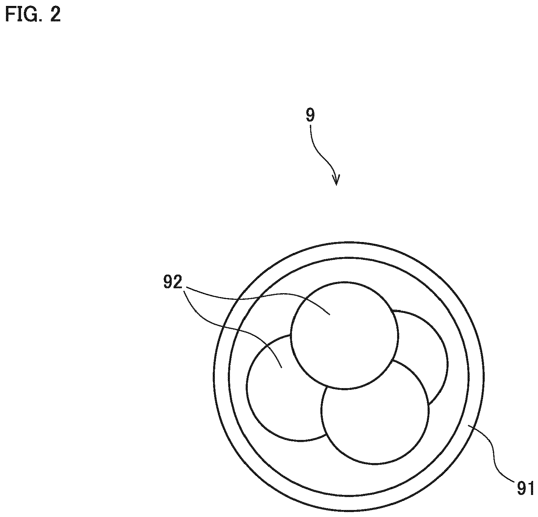

In the present embodiment, description will be given about a case in which a sample being analyzed is an embryo 9 of a human. FIG. 2 is a view showing an example of the embryo 9. The embryo 9 is formed through cleavage of a fertilized ovum. As shown in FIG. 2, the embryo 9 includes a plurality of cells 92 that are observed objects and are three-dimensionally distributed in a zona pellucida 91 having a spherical shape. Each of the cells 92 is either transparent or semi-transparent.

As shown in FIG. 1, the analysis apparatus 1 includes a stage 10, a light emitting unit 40, a two-dimensional photographing unit 20, a three-dimensional photographing unit 30, and a computer 50.

The stage 10 is a support stand that supports the sample holder 90. For the sample holder 90, a well plate is used, for example. The well plate includes a plurality of wells (recessed portions). The embryo 9 that is a sample is held in each of the wells, together with a culture solution. However, the sample holder 90 may be a dish including only one recessed portion. For a material of the sample holder 90, transparent resin that transmits light is used. The stage 10 includes an opening 11 penetrating vertically therethrough. The sample holder 90 is horizontally supported while being fit in the opening 11 of the stage 10. Thus, the upper surface and the lower surface of the sample holder 90 is not covered with the stage 10, but is exposed.

The light emitting unit 40 is placed above the sample holder 90 supported by the stage 10. The light emitting unit 40 includes a light emitting element such as an LED. To photograph using the two-dimensional photographing unit 20, the light emitting element of the light emitting unit 40 emits light. As a result, light is emitted from the light emitting unit 40 to the sample holder 90 below the light emitting unit 40.

The two-dimensional photographing unit 20 is a unit that two-dimensionally photographs the embryo 9 in the sample holder 90 using an optical microscope. The two-dimensional photographing unit 20 is placed below the sample holder 90 supported by the stage 10. As shown in FIG. 1, the two-dimensional photographing unit 20 includes a photographing optical system 21, a camera 22, and a focus change mechanism 23. The photographing optical system 21 includes a plurality of optical instruments including an object lens 211. The object lens 211 is a lens for focusing the camera 22 on the embryo 9 in the sample holder 90. The camera 22 includes an imaging element such as a CCD or a CMOS.

To perform two-dimensional photographing, the camera 22 photographs the embryo 9 in the sample holder 90 in a bright-field view while light is emitted to the sample holder 90 from the light emitting unit 40. As a result, a two-dimensional image of the embryo 9 is acquired in the form of digital data. The acquired two-dimensional image is input to the computer 50 from the camera 22. The two-dimensional image is data that is formed of a plurality of pixels arranged on a two-dimensional coordinate plane and has a luminance value determined for each of the plurality of pixels.

The focus change mechanism 23 is a mechanism that changes a focus position of the camera 22. The focus change mechanism 23 slightly changes a position of the object lens 211 along an optical axis using a motor or an actuator such as a piezoelectric actuator. This causes a slight change of the focus position of the camera 22 in a vertical direction. The two-dimensional photographing unit 20 photographs the embryo 9 a plurality of times (multi-focus photographing) while changing the focus position using the focus change mechanism 23. As a result, a plurality of two-dimensional images photographed with focus on different positions therein are acquired.

Further, the two-dimensional photographing unit 20 can be horizontally moved by a movement mechanism not shown, together with the light emitting unit 40. Thus, the field of view of the two-dimensional photographing unit 20 can be changed depending on each of the plurality of wells.

The three-dimensional photographing unit 30 is a unit that three-dimensionally photographs the embryo 9 in the sample holder 90. The three-dimensional photographing unit 30 is placed below the sample holder 90 supported by the stage 10. For the three-dimensional photographing unit 30, an optical coherence tomography (OCT) apparatus capable of photographing a tomographic image of the embryo 9 is used.

As shown in FIG. 1, the three-dimensional photographing unit 30 includes a light source 31, an object optical system 32, a reference optical system 33, a detection unit 34, and an optical fiber coupler 35. The optical fiber coupler 35 includes first to fourth optical fibers 351 to 354 coupled at a connecting portion 355. The light source 31, the object optical system 32, the reference optical system 33, and the detection unit 34 are connected to each other via optical paths formed by the optical fiber coupler 35.

The light source 31 includes a light emitting element such as an LED. The light source 31 emits low-coherence light including wide-band wavelength components. It is desirable that light emitted from the light source 31 is near-infrared light in order that light reaches the inside of the embryo 9. The light source 31 is connected to the first optical fiber 351. Light emitted from the light source 31 is incident on the first optical fiber 351, and is separated into light incident on the second optical fiber 352 and light incident on the third optical fiber 353 at the connecting portion 355.

The second optical fiber 352 is connected to the object optical system 32. Light travelling from the connecting portion 355 to the second optical fiber 352 is incident on the object optical system 32. The object optical system 32 includes a plurality of optical instruments including a collimator lens 321 and an object lens 322. The light emitted from the second optical fiber 352 passes through the collimator lens 321 and the object lens 322 and is emitted to the embryo 9 in the sample holder 90. At that time, the light converges toward the embryo 9 because of the presence of the object lens 322. Then, light reflected from the embryo 9 (hereinafter referred to as "observation light") passes through the object lens 322 and the collimator lens 321 and is again incident on the second optical fiber 352.

As shown in FIG. 1, the object optical system 32 is connected to a scan mechanism 323. The scan mechanism 323 slightly moves the object optical system 32 vertically and horizontally in accordance with an instruction from the computer 50. Thus, a position where light is incident on the embryo 9 can be slightly moved vertically and horizontally.

Further, the three-dimensional photographing unit 30 can be moved horizontally by the movement mechanism not shown. Thus, the field of view of the three-dimensional photographing unit 30 can be changed depending on each of the plurality of wells.

The third optical fiber 353 is connected to the reference optical system 33. Light travelling from the connecting portion 355 to the third optical fiber 353 is incident on the reference optical system 33. The reference optical system 33 includes a collimator lens 331 and a mirror 332. The light emitted from the third optical fiber 353 passes through the collimator lens 331 and is incident on the mirror 332. Then, light reflected from the mirror 332 (hereinafter referred to as "reference light") passes through the collimator lens 331 and is again incident on the third optical fiber 353.

As shown in FIG. 1, the mirror 332 is connected to an advance/retreat mechanism 333. The advance/retreat mechanism 333 slightly moves the mirror 332 along the optical axis in accordance with an instruction from the computer 50. This enables a change of an optical path length of reference light.

The fourth optical fiber 354 is connected to the detection unit 34. Observation light incident from the object optical system 32 on the second optical fiber 352 and reference light incident from the reference optical system 33 on the third optical fiber 353 join with each other at the connecting portion 355, and are incident on the fourth optical fiber 354. Then, light emitted from the fourth optical fiber 354 is incident on the detection unit 34. At that time, interference is caused between the observation light and the reference light due to a phase difference. This interference light has an optical spectrum that varies with the height of a position where the observation light is reflected.

The detection unit 34 includes a spectroscope 341 and a light detector 342. The interference light emitted from the fourth optical fiber 354 is dispersed into respective wavelength components in the spectroscope 341, and is incident on the light detector 342. The light detector 342 detects the dispersed interference light and outputs its corresponding detection signal to the computer 50. The computer 50 performs Fourier transform on the detection signal acquired from the light detector 342, to obtain a vertical light-intensity distribution of the observation light. Further, the above-described calculation of light-intensity distribution is repeated while the object optical system 32 is horizontally moved by the scan mechanism 323, so that a light-intensity distribution of the observation light at each coordinate set in a three-dimensional space can be obtained. Consequently, the computer 50 can acquire a three-dimensional image of the embryo 9. The three-dimensional image is data that is formed of a plurality of pixels arranged on a three-dimensional coordinate plane and has a luminance value determined for each of the plurality of pixels.

The computer 50 has a function as a control unit that controls operations of respective parts in the analysis apparatus 1. Further, the computer 50 has also a function as an analysis unit that analyzes the state of the embryo 9 on the basis of a two-dimensional image input from the two-dimensional photographing unit 20 and a three-dimensional image input from the three-dimensional photographing unit 30.

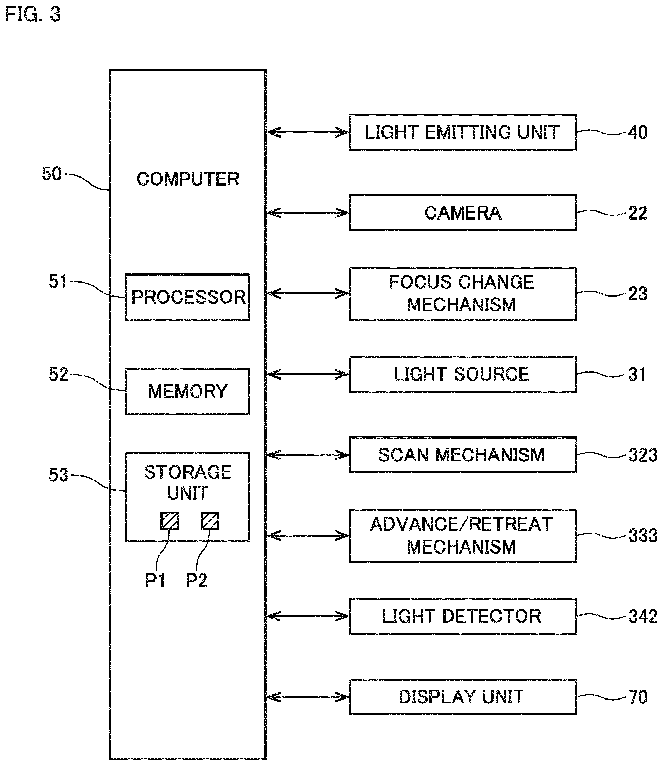

FIG. 3 is a control block diagram of the analysis apparatus 1. As conceptually shown in FIG. 3, the computer 50 includes a processor 51 such as a CPU, a memory 52 such as a RAM, and a storage unit 53 such as a hard disk drive. In the storage unit 53, a control program P1 for controlling the operations of the respective parts in the analysis apparatus 1 and an analysis program P2 for analyzing the state of the embryo 9 on the basis of a two-dimensional image D2 input from the two-dimensional photographing unit 20 and a three-dimensional image D3 input from the three-dimensional photographing unit 30, are stored.

Further, as shown in FIG. 3, the computer 50 is connected to the light emitting unit 40, the camera 22, the focus change mechanism 23, the light source 31, the scan mechanism 323, the advance/retreat mechanism 333, and the light detector 342 that have been described above, and a display unit 70 described later such that the computer 50 can communicate to/from each of them. The computer 50 controls the operations of the above-described parts in accordance with the control program P1. Thus, a photographing process of the embryo 9 held in the sample holder 90 proceeds. Moreover, the computer 50 analyzes the state of the embryo 9 by processing a two-dimensional image input from the two-dimensional photographing unit 20 and a three-dimensional image input from the three-dimensional photographing unit 30 in accordance with the analysis program P2.

### <2. Analyzing Process>

### <2-1. First Preferred Embodiment>

Next, a first preferred embodiment of photographing and analyzing processes of the embryo 9 in the above-described analysis apparatus 1 will be described.

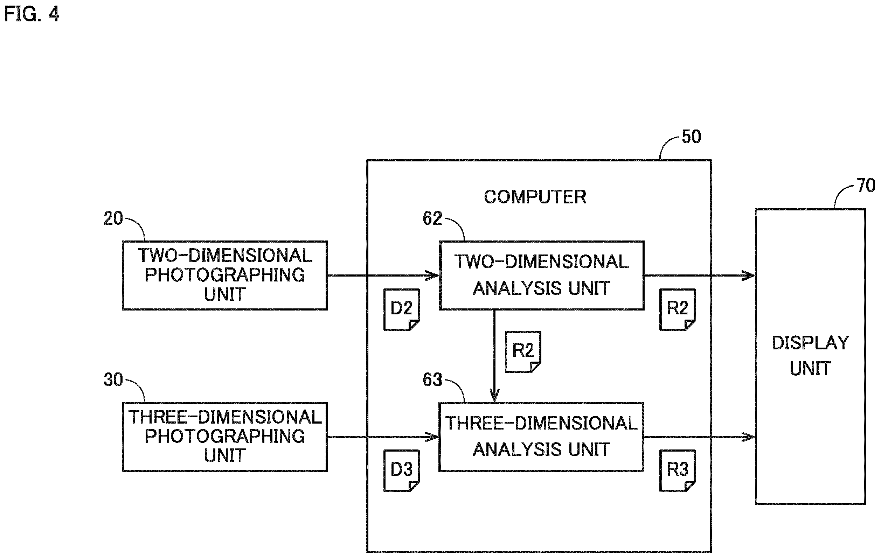

FIG. 4 is a block diagram conceptually showing the functions of the computer 50 for performing photographing and analyzing processes according to the first preferred embodiment. As shown in FIG. 4, the computer 50 includes a two-dimensional analysis unit 62 and a three-dimensional analysis unit 63. Each of functions of the two-dimensional analysis unit 62 and the three-dimensional analysis unit 63 is performed when the processor 51 of the computer 50 operates in accordance with the above-described analysis program P2.

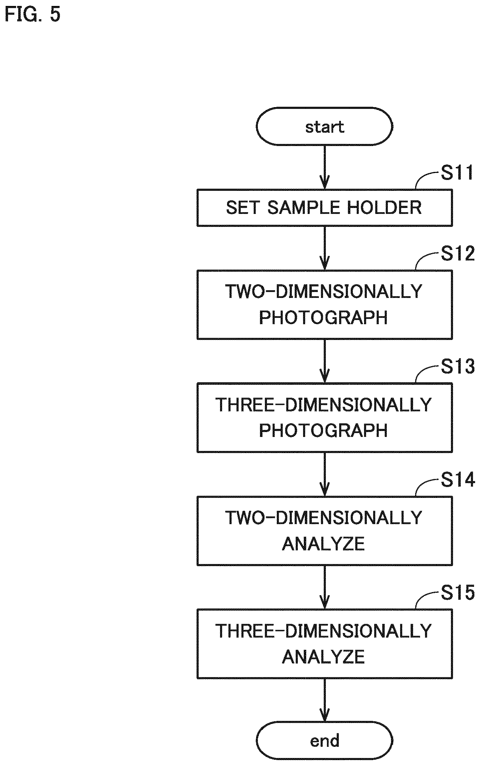

FIG. 5 is a flowchart showing a flow of the photographing and analyzing processes according to the first preferred embodiment. To photograph and analyze the embryo 9 in the analysis apparatus 1, the sample holder 90 is set on the stage 10, first (step S11). In the sample holder 90, the embryo 9, together with a culture solution, is held.

Subsequently, the analysis apparatus 1 two-dimensionally photographs the embryo 9 using the two-dimensional photographing unit 20 (step S12). As a result, a two-dimensional image D2 of the embryo 9 is acquired. Specifically, the camera 22 photographs the embryo 9 in the sample holder 90 in a bright-field view while light is emitted to the sample holder 90 from the light emitting unit 40. Further, the above-described photographing is performed a plurality of times while a focus position is changed by the focus change mechanism 23. As a result, a plurality of two-dimensional images D2 photographed with focus on different positions therein are acquired. The acquired two-dimensional images D2 are input to the computer 50 from the camera 22.

Subsequently, the analysis apparatus 1 three-dimensionally photographs the embryo 9 using the three-dimensional photographing unit 30 (step S13). In the present embodiment, a three-dimensional image D3 of the embryo 9 is acquired using optical coherence tomography. Specifically, light is emitted from the light source 31, and interference light of observation light and reference light is detected for each wavelength component by the light detector 342 while the object optical system 32 is slightly moved by the scan mechanism 323. The computer 50 calculates a light-intensity distribution at a position of each coordinate set of the embryo 9 on the basis of a detection signal output from the light detector 342. In this manner, the three-dimensional image D3 of the embryo 9 is acquired.

As described above, the plurality of two-dimensional images D2 and the three-dimensional image D3 for the same embryo 9 are acquired by the step S12 and the step S13.

Note that the order of the two-dimensional photographing of the step S12 and the three-dimensional photographing of the step S13 may be reversed. Specifically, the two-dimensional photographing unit 20 may two-dimensionally photographs the embryo 9 after the three-dimensional photographing unit 30 three-dimensionally photographs the embryo 9. Alternatively, the two-dimensional photographing of the step S12 and the three-dimensional photographing of the step S13 may be performed simultaneously. It is desired that the step S12 and the step S13 are performed simultaneously or substantially simultaneously (sequentially) because the state of the embryo 9 changes with time.

Subsequently, the two-dimensional analysis unit 62 of the computer 50 two-dimensionally analyzes the embryo 9 on the basis of the two-dimensional images D2 acquired by the two-dimensional photographing unit 20 (step S14). In the present embodiment, the two-dimensional analysis unit 62 counts the number of the cells 92 included in the embryo 9 on the basis of the two-dimensional images D2. A higher-resolution image can be acquired in two-dimensional photographing than that in three-dimensional photographing. Thus, the contours of the cells 92 in the two-dimensional image D2 can be recognized more easily than those in the three-dimensional image D3. Therefore, the number of the cells 92 can be counted more accurately in the two-dimensional image D2 than that in the three-dimensional image D3.

One of conceivable methods of counting the number of the cells 92 is to utilize deep learning, for example. Specifically, a training model in which the two-dimensional image D2 of the embryo 9 is set as an input variable and the number of the cells 92 included in the embryo 9 is set as an output variable is prepared in advance by machine learning. Then, the two-dimensional image D2 photographed by the two-dimensional photographing unit 20 is input to the training model, so that an estimated value of the number of the cells 92 can be output from the training model. For an algorithm of the deep learning, a classification network can be used, for example.

Alternatively, the two-dimensional images D2 photographed by the two-dimensional photographing unit 20 may be input to a training model acquired by learning in which a two-dimensional Gaussian distribution having a peak at a center of each of the cells 92 is a correct answer image. In this case, an image having a two-dimensional Gaussian distribution corresponding to each of the cells 92 is output from the training model. Thus, by counting the number of the peaks in the output image, it is possible to estimate the number of the cells 92.

The two-dimensional analysis unit 62 stores the number of the cells 92 acquired by analysis of the two-dimensional images D2 into the storage unit 53, as a two-dimensional analysis result R2. Further, the two-dimensional analysis unit 62 displays the two-dimensional analysis result R2 on the display unit 70 such as a liquid crystal display.

Subsequently, the three-dimensional analysis unit 63 of the computer 50 three-dimensionally analyzes the embryo 9 on the basis of the three-dimensional image D3 acquired by the three-dimensional photographing unit 30 (step S15). In the present embodiment, the three-dimensional analysis unit 63 calculates the volumes of the cells 92 included in the embryo 9 on the basis of the three-dimensional image D3. Specifically, the three-dimensional analysis unit 63 classifies the three-dimensional image D3 into a cell area corresponding to the cells 92 and a non-cell area other than the cells 92 (area corresponding to fragments, for example). For an area classification method in such a case, a known local thickness method or the like can be used, for example.

Then, the three-dimensional analysis unit 63 defines a boundary between the cells 92 in the above-described cell area included in the three-dimensional image D3. As a result, the cell area is divided into respective areas for the cells 92. For a method of defining a boundary between the cells 92, known Watershed algorithm or the like can be used, for example. Thereafter, the three-dimensional analysis unit 63 calculates the volume of each of the respective divisional areas for the cells 92.

At that time, by using information about the number of the cells 92 corresponding to the two-dimensional analysis result R2, it is possible to more accurately define a boundary between the cells 92. For example, according to the Watershed algorithm, a marker serving as an indicator of a position of each of the cells 92 is specified in the three-dimensional image D3. The markers are specified such that the number of the markers matches with the two-dimensional analysis result R2. This allows the number of the markers to accurately agree with the number of the cells 92 included in the embryo 9. In other words, the number of areas of which volumes are to be calculated can be caused to accurately agree with the number of the cells 92 included in the embryo 9. Consequently, a boundary between the cells 92 can be accurately specified, and thus the volumes of the cells 92 included in the embryo 9 can be accurately output.

The three-dimensional analysis unit 63 stores the volumes of the cells 92 acquired by analysis of the three-dimensional image D3 into the storage unit 53, as a three-dimensional analysis result R3. Further, the three-dimensional analysis unit 63 displays the three-dimensional analysis result R3 on the display unit 70 such as a liquid crystal display.

As described above, in the analysis apparatus 1, the three-dimensional image D3 is analyzed using an indicator included in the two-dimensional analysis result R2. Thus, the three-dimensional image D3 can be analyzed using an indicator that is acquired by two-dimensional analysis and is more accurate than that acquired by three-dimensional analysis. Consequently, the three-dimensional analysis result R3 with higher accuracy can be acquired.

Especially, in the present embodiment, the plurality of two-dimensional images D2 are acquired by multi-focus photographing for the single embryo 9. Then, two-dimensional analysis is performed on the basis of the plurality of two-dimensional images D2. Thus, it is possible to acquire the two-dimensional analysis result R2 with higher accuracy than that acquired by two-dimensional analysis on the basis of the single two-dimensional image D2.

Further, in the present embodiment, information about the number of the cells 92 that is acquired by two-dimensional analysis and is more accurate than that acquired by three-dimensional analysis is used in three-dimensional analysis. This enables accurate three-dimensional analysis. In calculating the volumes of the cells 92 in three-dimensional analysis, in particular, information about the number of the cells 92 serves as important reference information. Thus, by using information about the number of the cells 92 that is accurately acquired by two-dimensional analysis, it is possible to accurately calculate the volumes of the cells 92.

### <2-2. Second Preferred Embodiment>

Next, a second preferred embodiment of photographing and analyzing processes of the embryo 9 in the above-described analysis apparatus 1 will be described.

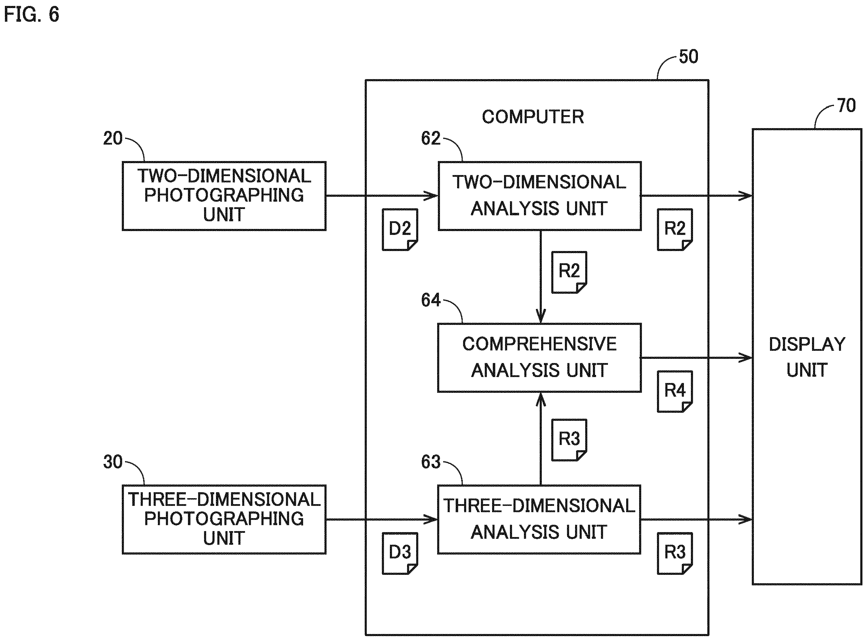

FIG. 6 is a block diagram conceptually showing the functions of the computer 50 for performing the photographing and analyzing processes according to the second preferred embodiment. As shown in FIG. 6, the computer 50 includes the two-dimensional analysis unit 62, the three-dimensional analysis unit 63, and a comprehensive analysis unit 64. The respective functions of the two-dimensional analysis unit 62, the three-dimensional analysis unit 63, and the comprehensive analysis unit 64 are performed when the processor 51 of the computer 50 operates in accordance with the above-described analysis program P2.

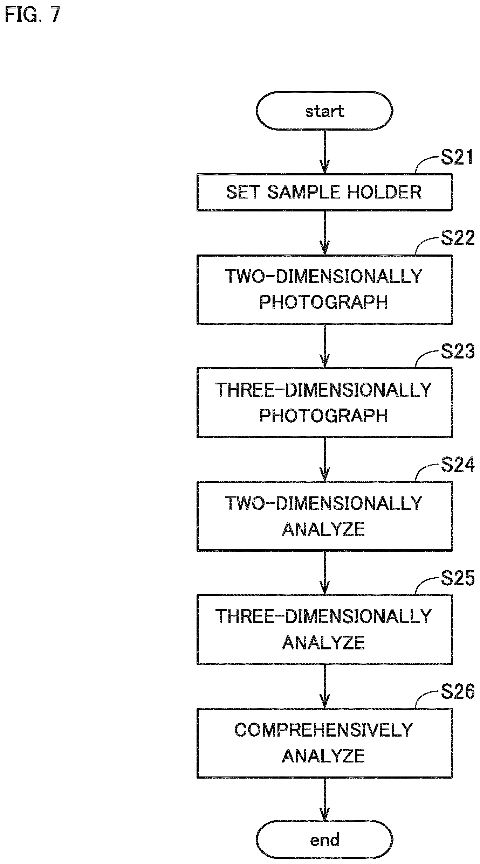

FIG. 7 is a flowchart showing a flow of the photographing and analyzing processes according to the second preferred embodiment. Also in the second preferred embodiment, the analysis apparatus 1 sets the sample holder 90 on the stage 10 (step S21), first, two-dimensionally photographs the embryo 9 using the two-dimensional photographing unit 20 (step S22), and three-dimensionally photographs the embryo 9 using the three-dimensional photographing unit 30 (step S23). The processes of the steps S21 to S23 are similar to the steps S11 to S13 in the above-described first preferred embodiment, and hence duplicated description is omitted.

Subsequently, the two-dimensional analysis unit 62 of the computer 50 two-dimensionally analyzes the embryo 9 on the basis of the two-dimensional images D2 acquired by the two-dimensional photographing unit 20 (step S24). In the present embodiment, the two-dimensional analysis unit 62 evaluates the embryo 9 using the Veeck's classification on the basis of the two-dimensional images D2. According to the Veeck's classification, there are five grades of grade 1 to grade 5 representing the state of the embryo 9 in a cleavage stage. In the Veeck's classification, the state of the embryo 9 is evaluated on the basis of the size uniformity of the cells 92 included in the embryo 9 and the amount of fragments included in the embryo 9.

In a step S24, the two-dimensional analysis unit 62 calculates the size uniformity of the cells 92 and the amount of fragments on the basis of the plurality of two-dimensional images D2 acquired by multi-focus photographing. Then, on the basis of the thus calculated indicator values, a classification result of the embryo 9 according to the Veeck's classification is determined and output. Alternatively, in the step S24, the size uniformity of the cells 92 and the level (high/low or much/little) of the amount of fragments may be categorized using deep learning. Further alternatively, the two-dimensional analysis unit 62 may directly determine a classification result according to the Veeck's classification on the basis of the plurality of two-dimensional images D2 using deep learning such as a classification network, without calculating the size uniformity of the cells 92, the amount of fragments, and the like.

The two-dimensional analysis unit 62 stores the classification result according to the Veeck's classification acquired by analysis of the two-dimensional images D2 into the storage unit 53, as the two-dimensional analysis result R2. Further, the two-dimensional analysis unit 62 displays the two-dimensional analysis result R2 on the display unit 70 such as a liquid crystal display.

Subsequently, the three-dimensional analysis unit 63 of the computer 50 three-dimensionally analyzes the embryo 9 on the basis of the three-dimensional image D3 acquired by the three-dimensional photographing unit 30 (step S25). In the present embodiment, the three-dimensional analysis unit 63 evaluates the embryo 9 using the Veeck's classification on the basis of the three-dimensional image D3. Specifically, the three-dimensional analysis unit 63 calculates the size uniformity of the cells 92 and the amount of fragments on the basis of the three-dimensional image D3. Then, on the basis of the thus calculated indicator values, a classification result of the embryo 9 according to the Veeck's classification is determined and output. Alternatively, the three-dimensional analysis unit 63 may directly determine a classification result according to the Veeck's classification on the basis of the three-dimensional image D3 using deep learning such as a classification network, without calculating the size uniformity of the cells 92, the amount of fragments, and the like.

The three-dimensional analysis unit 63 stores the classification result according to the Veeck's classification acquired by analysis of the three-dimensional image D3 into the storage unit 53, as the three-dimensional analysis result R3. Further, the three-dimensional analysis unit 63 displays the three-dimensional analysis result R3 on the display unit 70 such as a liquid crystal display.

As described above, in the present embodiment, the classification results of the same embryo 9 according to the Veeck's classification are acquired in two different approaches in the step S24 and the step S25.

Note that the order of the two-dimensional analysis in the step S24 and the three-dimensional analysis in the step S25 may be reversed. Specifically, two-dimensional analysis may be performed to evaluate the embryo 9 using the Veeck's classification after three-dimensional analysis is performed to evaluate the embryo 9 using the Veeck's classification. Alternatively, the two-dimensional analysis in the step S24 and the three-dimensional analysis in the step S25 may be performed simultaneously.

Thereafter, the comprehensive analysis unit 64 of the computer 50 outputs a classification result according to the Veeck's classification as a comprehensive analysis result R4 on the basis of the classification result according to the Veeck's classification acquired by the two-dimensional analysis and the classification result according to the Veeck's classification acquired by the three-dimensional analysis (step S26). For example, only when the classification result according to the Veeck's classification as the two-dimensional analysis result R2 and the classification result according to the Veeck's classification as the three-dimensional analysis result R3 agree with each other, the comprehensive analysis unit 64 outputs the classification result according to the Veeck's classification as the comprehensive analysis result R4.

On the other hand, when the classification result according to the Veeck's classification as the two-dimensional analysis result R2 and the classification result according to the Veeck's classification as the three-dimensional analysis result R3 do not agree with each other, the comprehensive analysis unit 64 may output both of the classification results or may cause a user to select which of the two-dimensional analysis result R2 and the three-dimensional analysis result R3 to output as the comprehensive analysis result R4. Alternatively, when the classification result according to the Veeck's classification as the two-dimensional analysis result R2 and the classification result according to the Veeck's classification as the three-dimensional analysis result R3 do not agree with each other, the comprehensive analysis unit 64 may automatically select one of the two-dimensional analysis result R2 and the three-dimensional analysis result R3 while adding information indicating that the reliability of the result is low, to the comprehensive analysis result R4.

The comprehensive analysis unit 64 stores the classification result according to the Veeck's classification acquired by comprehensive analysis in the step S26 into the storage unit 53, as the comprehensive analysis result R4. Further, the comprehensive analysis unit 64 displays the comprehensive analysis result R4 on the display unit 70 such as a liquid crystal display.

As described above, in the present embodiment, the classification result according to the Veeck's classification as the comprehensive analysis result R4 is output using two classification results according to the Veeck's classification acquired in two different approaches of two-dimensional analysis and three-dimensional analysis. Therefore, the classification result with high accuracy can be acquired.

Note that, regarding the sizes (volumes) of the cells 92 serving as indicators for the Veeck's classification, the three-dimensional image D3 allows more accurate calculation than the two-dimensional image D2. Meanwhile, regarding the amount of fragments serving as another indicator for the Veeck's classification, the two-dimensional image D2 allows more accurate calculation than the three-dimensional image D3. Thus, the comprehensive analysis unit 64 may use the amount of fragments calculated on the basis of the two-dimensional images D2 as the two-dimensional analysis result R2 while using the size uniformity of the cells 92 calculated as the comprehensive analysis result R4 on the basis of the three-dimensional image D3 as the three-dimensional analysis result R3, and output a classification result according to the Veeck's classification on the basis of those results. In this manner, an accurate classification result according to the Veeck's classification can be output by virtue of the respective strong points of two-dimensional analysis and three-dimensional analysis.

### <3. Modifications>

Hereinabove, the preferred embodiments of the present invention have been described, but the present invention is not limited to the above-described preferred embodiments.

In the above-described first preferred embodiment, in the two-dimensional analysis in the step S14, the number of cells 92 included in the embryo 9 is output, but another indicator may be output in two-dimensional analysis. For example, the amount of fragments included in the embryo 9, the positions of the cells 92 in the embryo 9, the spread of the cells 92 in the embryo 9, a classification result according to the Veeck's classification, or the like may be output as the two-dimensional analysis result R2 in two-dimensional analysis in the step S14.

Further, in the above-described first preferred embodiment, in the three-dimensional analysis in the step S15, the volumes of the cells 92 included in the embryo 9 are output. Alternatively, in three-dimensional analysis, the shapes of the plurality of cells 92 are identified on the basis of the number of the cells 92 acquired by two-dimensional analysis, and a result of identification of the shapes of the cells 92 may be output as the three-dimensional analysis result R3. Further alternatively, in three-dimensional analysis, another indicator may be output while the two-dimensional analysis result R2 is used. For example, in three-dimensional analysis in the step S15, the amount of fragments included in the embryo 9, a classification result according to the Veeck's classification, or the like may be output. Moreover, in the above-described first preferred embodiment, the computer 50 may output a classification result according to the Veeck's classification on the basis of a three-dimensional analysis result after the three-dimensional analysis in the step S15.

Further, in the above-described second preferred embodiment, a classification result according to the Veeck's classification is output as the comprehensive analysis result R4 in the step S26, but an indicator other than a classification result according to the Veeck's classification may be output as the comprehensive analysis result R4. For example, the volumes of the cells 92, the amount of fragments, or the like may be output as the comprehensive analysis result R4.

Further, in the above-described embodiments, the two-dimensional photographing unit 20 performs multi-focus photographing in a bright-field view. Alternatively, the two-dimensional photographing unit 20 may acquire the two-dimensional image D2 by another photographing method.

Further, in the above-described embodiments, the three-dimensional photographing unit 30 performs photographing using optical coherence tomography. Alternatively, the three-dimensional photographing unit 30 may acquire the three-dimensional image D3 by another photographing method.

Further, in the above-described embodiments, the analysis apparatus 1 outputs each of the two-dimensional analysis result R2, the three-dimensional analysis result R3, and the comprehensive analysis result R4 to the display unit 70. Alternatively, the analysis apparatus 1 may output the two-dimensional analysis result R2, the three-dimensional analysis result R3, and the comprehensive analysis result R4 to another computer, in the form of data.

Further, the above-described embodiments have discussed the case in which a sample being analyzed is the embryo 9 of a human, and an observed object is the cell 92 included in the embryo 9. However, the "sample" in the present invention is not limited to the embryo 9, and any matter in which a plurality of observed objects are three-dimensionally distributed can be applied to the "sample".

Further, the respective elements described in the above-described embodiments and modifications may be appropriately combined unless contradiction arises.

While the invention has been shown and described in detail, the foregoing description is in all aspects illustrative and not restrictive. It is therefore understood that numerous modifications and variations can be devised without departing from the scope of the invention.

## Claims

1. An analysis method for analyzing a sample (9) in which a plurality of observed objects (92) are three-dimensionally distributed, comprising the steps of:
a) two-dimensionally photographing the sample (9), to acquire a two-dimensional image (D2);
b) three-dimensionally photographing the sample (9), to acquire a three-dimensional image (D3);
c) analyzing the two-dimensional image (D2), to output a two-dimensional analysis result (R2); and
d) analyzing the three-dimensional image (D3), to output a three-dimensional analysis result (R3), wherein
the step d) includes analyzing the three-dimensional image (D3) using an indicator included in the two-dimensional analysis result (R2).

2. The analysis method according to claim 1, wherein
the sample (9) is an embryo,
the observed objects (92) are cells (92) included in the embryo (9), and
the two-dimensional analysis result is the number of the cells (92) included in the embryo (9).

3. The analysis method according to claim 2, wherein
the three-dimensional analysis result (R3) is a result of identification of shapes of the cells (92) included in the embryo (9), and
the step d) includes determining the number of areas for which the result of identification of the shapes of the cells (92) is calculated, on the basis of the number of cells (92) acquired in the step c).

4. The analysis method according to claim 2 or 3, further comprising the step of e) outputting a classification result according to Veeck's classification representing a state of the embryo (9) on the basis of the three-dimensional analysis result (R3), after the step d).

5. An analysis method for analyzing a sample (9) in which a plurality of observed objects (92) are three-dimensionally distributed, comprising the steps of:
a) two-dimensionally photographing the sample (9), to acquire a two-dimensional image (D2);
b) three-dimensionally photographing the sample (9), to acquire a three-dimensional image (D3);
c) analyzing the two-dimensional image (D2), to output a two-dimensional analysis result (R2);
d) analyzing the three-dimensional image (D3), to output a three-dimensional analysis result (R3); and
e) outputting a comprehensive analysis result (R4) on the basis of the two-dimensional analysis result (R2) and the three-dimensional analysis result (R3).

6. The analysis method according to claim 5, wherein
the sample (9) is an embryo (9), and
each of the two-dimensional analysis result (R2), the three-dimensional analysis result (R3), and the comprehensive analysis result (R4) is a classification result according to Veeck's classification representing a state of the embryo (9).

7. The analysis method according to any of claims 1 to 6, wherein
the step a) includes photographing in a bright-field view while changing a focus position, to acquire a plurality of the two-dimensional images (D2), and
the step c) includes analyzing the plurality of two-dimensional images (D2), to acquire the two-dimensional analysis result (R2).

8. The analysis method according to any of claims 1 to 7, wherein, in the step b), the three-dimensional image (D3) is acquired using optical coherence tomography.

9. An analysis apparatus (1) that analyzes a sample (9) in which a plurality of observed objects (92) are three-dimensionally distributed, comprising:
a two-dimensional photographing unit (20) configured to two-dimensionally photograph the sample (9), to acquire a two-dimensional image (D2);
a three-dimensional photographing unit (30) configured to three-dimensionally photograph the sample (9), to acquire a three-dimensional image (D3); and
an analysis unit (62, 63) configured to analyze the sample (9) on the basis of the two-dimensional image (D2) and the three-dimensional image (D3), wherein
the analysis unit (62, 63) performs:
a two-dimensional analyzing process of analyzing the two-dimensional image (D2), to output a two-dimensional analysis result (R2); and
a three-dimensional analyzing process of analyzing the three-dimensional image (D3), to output a three-dimensional analysis result (R3), and
in the three-dimensional analyzing process, the three-dimensional image (D3) is analyzed using an indicator included in the two-dimensional analysis result (R2).

10. An analysis apparatus (1) that analyzes a sample (9) in which a plurality of observed objects (92) are three-dimensionally distributed, comprising:
a two-dimensional photographing unit (20) configured to two-dimensionally photograph the sample (9), to acquire a two-dimensional image (D2);
a three-dimensional photographing unit (30) configured to three-dimensionally photograph the sample (9), to acquire a three-dimensional image (D3); and
an analysis unit (62, 63, 64) configured to analyze the sample (9) on the basis of the two-dimensional image (D2) and the three-dimensional image (D3), wherein
the analysis unit (62, 63, 64) performs:
a two-dimensional analyzing process of analyzing the two-dimensional image (D2), to output a two-dimensional analysis result (R2);
a three-dimensional analyzing process of analyzing the three-dimensional image (D3), to output a three-dimensional analysis result (R3); and
a comprehensive analyzing process of outputting a comprehensive analysis result (R4) on the basis of the two-dimensional analysis result (R2) and the three-dimensional analysis result (R3).
